# EUROPEAN PATENT APPLICATION

(11) **EP 4 746 101 A1**
(43) Date of publication of application: **20.05.2026**
(21) Application number: 24895513.0
(22) Date of filing: 31.05.2024
(51) Int. Cl.: H01M 10/058

(54) **TAB THREADING DEVICE FOR BATTERY, AND ASSEMBLY APPARATUS**

(30) Priority: 30.11.2023 CN 202323280594 U
(71) Applicant: Contemporary Amperex Technology Co., Limited, Ningde, Fujian 352100 (CN)
(72) Inventor: WU, Kai, Ningde, Fujian 352100 (CN); SUN, Weiwei, Ningde, Fujian 352100 (CN); ZHANG, Yongli, Ningde, Fujian 352100 (CN); TANG, Wenxiang, Ningde, Fujian 352100 (CN); PAN, Wensheng, Ningde, Fujian 352100 (CN); FAN, Xiang, Ningde, Fujian 352100 (CN)
(74) Representative: Lorenz Seidler Gossel Part. mbB
(86) International application number: PCT/CN2024/096836
(87) International publication number: WO 2025/112404

(57) **Abstract**

Disclosed in the present application are a tab threading device for a battery, and an assembly apparatus. The battery comprises a case and an electrode assembly, wherein the case is provided with an accommodating cavity and through holes. The tab threading device is used for guiding tab parts of the electrode assembly to extend out through the through holes. The tab threading device comprises a clamping mechanism and a driving mechanism, wherein the clamping mechanism comprises a first clamping member and a second clamping member; and the driving mechanism is configured to drive the first clamping member and/or the second clamping member to move, so that the first clamping member and the second clamping member can clamp the tab parts to pass through the through hole and extend from the accommodating cavity. In this way, the present application can effectively reduce the assembly difficulty of the battery.

## Description

The present application claims priority to Chinese Patent Application No. 202323280594X, entitled "TAB THREADING DEVICE FOR BATTERY, AND ASSEMBLY APPARATUS", filed on November 30, 2023, which is incorporated herein by reference in its entirety.

### TECHNICAL FIELD

The present application relates to the technical field of batteries, and in particular, to a tab-through device and assembly apparatus for a battery.

### BACKGROUND

A battery refers to a cup, trough, or other container-or part of the space within a composite container-that contains an electrolyte solution and metal electrodes to generate an electric current; it is a device capable of converting chemical energy into electric energy. With the development of science and technology, batteries which offer advantages such as ease of carrying, simple and convenient charging/discharging operations, and long-term stable power supply have been widely applied in fields such as automobiles, household appliances, and aerospace.

The tab part of a battery is a metal conductor that leads the positive electrode and the negative electrode of the battery cell out of the housing; therefore, during the assembly process of the battery, the tab part of the battery needs to be led out of the housing to serve as the contact point for charging and discharging the battery. However, during the assembly process of the battery, when assembling the battery cell into the housing, the tab part is prone to bending inside the housing and cannot be extended out of the housing, which results in a higher difficulty in the battery assembly and manufacturing process and a lower yield rate of finished batteries.

### SUMMARY

The technical problem to be addressed in the present application is to provide a tab-through device and assembly apparatus for a battery, so that the tab part can smoothly extend out of the housing, thereby effectively reducing the difficulty of battery assembly and effectively improving the assembly efficiency of the battery.

In a first aspect, the present application provides a tab-through device for a battery. The battery includes a housing and an electrode assembly. The housing is provided with an accommodation chamber, and a through hole that communicates the accommodation chamber with the outside is formed in the housing; the electrode assembly is arranged in the accommodation chamber. The tab-through device is configured to guide a tab part of the electrode assembly to extend out of the through hole. The tab-through device includes a clamping mechanism and a driving mechanism. The clamping mechanism includes a first clamping member and a second clamping member that are movably connected, and a clamping space with an adjustable opening and closing angle is capable of being formed between the first clamping member and the second clamping member. The driving mechanism is in transmission connection with the first clamping member and/or the second clamping member, so as to drive the first clamping member and/or the second clamping member to move to adjust the opening and closing angle. The driving mechanism is configured to drive the first clamping member and/or the second clamping member to move, so that the first clamping member and the second clamping member are capable of clamping the tab part to pass through the through hole and extend out of the accommodation chamber.

According to the above method, through the arrangement of a clamping mechanism that can extend into the accommodation chamber to clamp the tab part and a driving mechanism in transmission connection with the first clamping member and/or the second clamping member, it is possible, during the assembly process of the battery, when the housing is sleeved onto the electrode assembly to enable the electrode assembly to be accommodated in the accommodation chamber, for the driving mechanism to drive the first clamping member and/or the second clamping member to move, so as to adjust the opening and closing angle to clamp the tab part. Without affecting or damaging the housing, the tab part can be guided smoothly into the through hole and smoothly extend out of the housing. As a result, the tab part is less likely to obstruct the housing from being sleeved onto the electrode assembly, and the tab part is also less likely to be damaged by collision with the housing or to fail to smoothly pass through the through hole. Thus, precise insertion of the electrode assembly into the housing is achieved, effectively improving the working stability and reliability of the tab-through device, effectively reducing the difficulty of battery assembly, and effectively enhancing both the assembly efficiency and the yield rate of the battery.

In some embodiments, the first clamping member and/or the second clamping member are configured to be rotatable about a preset rotation axis.

According to the above method, the opening and closing angle of the clamping space can be adjusted by using the rotation of the first clamping member and/or the second clamping member, facilitating the tab part to extend into the clamping space and thus facilitating the clamping mechanism to smoothly clamp the tab part. Such a structure is simple and easy to operate, which is beneficial for improving the clamping efficiency of the clamping mechanism and effectively enhances the working reliability of the clamping assembly.

In some embodiments, the preset rotation axis is arranged to be perpendicular to an axis of the through hole.

According to the above method, through the arrangement of a preset rotation axis that is perpendicular to the axis of the through hole, it is convenient for the clamping mechanism to position the tab part by using the first clamping member and the second clamping member when clamping the tab part. In addition, when clamping the tab part, the clamping mechanism only needs to adjust the opening and closing angle, without additionally adjusting the angle or posture of the entire clamping mechanism relative to the tab part, which is beneficial for reducing the possibility of damaging the tab part and improving the clamping efficiency of the clamping mechanism, and effectively improves the working reliability of the clamping assembly.

In some embodiments, the first clamping member includes a first clamping plate body and a first connecting part, and the first clamping plate body is connected to the first connecting part; the second clamping member includes a second clamping plate body and a second connecting part, and the second clamping plate body is connected to the second connecting part. The first clamping plate body and the first connecting part are connected in a bending manner. A bending joint between the first clamping plate body and the first connecting part is rotatably connected to the second connecting part and/or the second clamping plate body. The clamping space is formed between the first clamping plate body and the second clamping plate body. An included angle between the first clamping plate body and the second clamping plate body is formed as the opening and closing angle. The driving mechanism is in transmission connection with the first connecting part and/or the second connecting part, so as to drive the first clamping plate body and/or the second clamping plate body to rotate to adjust the opening and closing angle.

According to the above method, the first clamping member is configured to include the first clamping plate body and the first connecting part, and the second clamping member is configured to include the second clamping plate body and the second connecting part, so that the first clamping plate body and the second clamping plate body are used to clamp the tab part, and the first connecting part and/or the second connecting part are used to drive and adjust the opening and closing angle, thereby achieving the precise control of the clamping mechanism while improving the structural stability, effectively improving the clamping efficiency of the clamping mechanism, and effectively improving the working reliability of the clamping assembly.

In some embodiments, the first clamping member is provided with an avoidance hole penetrating through two side surfaces thereof. The avoidance hole spans the first connecting part and the first clamping plate body via the bending joint. During the rotation process of the first clamping plate body and/or the second clamping plate body, the avoidance hole is configured to avoid the second connecting part.

According to the above method, through the arrangement of an avoidance hole to provide space for relative rotation between the second clamping member and the first clamping member, it is convenient to clamp the tab part by adjusting the opening and closing angle, achieving the precise control of the clamping mechanism while improving the structural stability, effectively improving the clamping efficiency of the clamping mechanism, and effectively improving the working reliability of the clamping assembly.

In some embodiments, a first rotating shaft accommodation hole is formed in the bending joint on both sides of the avoidance hole, and a second rotating shaft accommodation hole is formed in the second connecting part; the clamping mechanism includes a rotating shaft, and the rotating shaft is provided in the first rotating shaft accommodation hole and the second rotating shaft accommodation hole in a penetrating manner.

According to the above method, the rotating shaft is provided in the first rotating shaft accommodation hole and the second rotating shaft accommodation hole in a penetrating manner, so that connection and relative rotation between the first clamping member and the second clamping member can be achieved, and the opening and closing angle can be adjusted while ensuring the structural stability, facilitating the improvement in the clamping efficiency of the clamping mechanism, and effectively improving the working reliability of the clamping assembly.

In some embodiments, a first end of the first clamping member and a first end of the second clamping member are connected to each other, and the first clamping member and/or the second clamping member are/is configured to be capable of elastically deflecting about a joint therebetween, so that the first clamping member and the second clamping member are rotatably connected. The clamping mechanism further includes a pressing slider. The pressing slider is slidably sleeved onto the first clamping member and the second clamping member. When the pressing slider is in a releasing position, the first clamping member and the second clamping member, in a direction from the first end to a second end, are arranged at an included angle in an open manner, so as to form the clamping space. The driving mechanism is in transmission connection with the pressing slider, and is configured to drive the pressing slider to slide along the first clamping member and the second clamping member, so that the opening and closing angle is capable of being changed through the pressing slider.

According to the above method, the driving mechanism drives the pressing slider to slide, so that the opening and closing angle of the clamping mechanism can be adjusted. Such a structure is simple, easy to operate, and highly stable, which is beneficial for improving the working stability and reliability of the tab-through device.

In some embodiments, the first clamping member and the second clamping member are arranged in a sheet shape, and the first clamping member and the second clamping member are arranged opposite to each other.

According to the above method, the first clamping member and the second clamping member are arranged in a sheet shape, which can provide conditions for adjusting the opening and closing angle while reducing the manufacturing cost, effectively reduce the possibility that the first clamping member and the second clamping member are too thick to provide a sufficient opening and closing angle, effectively improve the working effectiveness of the clamping mechanism, and facilitate the clamping mechanism to smoothly clamp the tab part.

In some embodiments, a process of sleeving the housing onto the electrode assembly includes a first stage. In the first stage, the first clamping member and the second clamping member are configured to be capable of moving together with the housing relative to the electrode assembly, so that the tab part enters the clamping space, and the driving mechanism drives the first clamping member and the second clamping member to reduce the opening and closing angle to clamp the tab part.

According to the above method, the first clamping member and the second clamping member move together with the housing relative to the electrode assembly in the first stage, so that the tab part can enter the clamping space between the first clamping member and the second clamping member as the electrode assembly is gradually inserted into the housing. In this way, the tab part can be smoothly clamped, and the clamping efficiency of the clamping mechanism and the assembly efficiency of the battery can be effectively improved.

In some embodiments, a process of sleeving the housing onto the electrode assembly includes a second stage following the first stage. In the second stage, the first clamping member and the second clamping member are configured to be capable of moving relative to the housing in directions away from each other while keeping clamping the tab part, so that the tab part passes through the through hole and extends out of the accommodation chamber.

According to the above method, the first clamping member and the second clamping member move relative to the housing in directions away from each other in the second stage, and the clamping on the tab part is maintained, so that the tab part can be clamped to pass through the through hole as the electrode assembly is further inserted into the housing. This makes the assembly process smooth and clear, effectively improving the efficiency of the tab part passing through the through hole and the assembly efficiency of the battery.

In some embodiments, the driving mechanism is configured to drive the first clamping member and/or the second clamping member to rotate, so that a relative position between the first clamping member and the second clamping member is capable of being switched between a clamping position and a releasing position. The opening and closing angle in the clamping position is less than the opening and closing angle in the releasing position. Prior to the first stage, the first clamping member and the second clamping member are configured to be capable of moving relative to the housing to move toward the housing, and the driving mechanism is configured to drive the first clamping member and/or the second clamping member to rotate to switch to the clamping position, so that the first clamping member and the second clamping member can pass through the through hole and extend into the accommodation chamber. The driving mechanism is configured to drive the first clamping member and/or the second clamping member to rotate after the first clamping member and the second clamping member extend into a space of the accommodation chamber, so as to switch the relative position from the clamping position to the releasing position.

According to the above method, the clamping mechanism in the clamping position in the first stage can smoothly pass through the through hole and extend into the accommodation chamber. Compared with the clamping mechanism in the releasing position that passes through the through hole, this can effectively reduce the occupied space of the clamping mechanism and reduce the area of the required through hole, enabling the first clamping member and the second clamping member to smoothly pass through the through hole, and effectively improving the space utilization rate. Moreover, after the clamping mechanism extends into the accommodation chamber and switches from the clamping position to the releasing position, the tab part can easily enter the clamping space of the clamping mechanism, thereby facilitating the clamping of the tab part and effectively enhancing the working reliability of the tab-through device.

According to a second aspect, the present application provides an assembly apparatus for a battery. The assembly apparatus includes a housing-insertion device and the tab-through device described above. The housing-insertion device is configured to assemble the electrode assembly into the housing from an open end of the housing; the housing-insertion device includes a housing fixing mechanism and a carrying assembly, the housing fixing mechanism is configured to fix the housing, and the carrying assembly is configured to carry the electrode assembly. The housing fixing mechanism and the tab-through device are capable of moving relative to the carrying assembly, so as to correspond to moving away from or toward the carrying assembly. The housing fixing mechanism is configured to sleeve the housing onto the electrode assembly; the driving mechanism is configured to drive the first clamping member and the second clamping member to clamp the tab part in the accommodation chamber, so that the tab part passes through the through hole and extends out of the accommodation chamber.

According to the above method, when the housing of the battery is sleeved onto the electrode assembly, the tab part of the battery can be guided smoothly into the through hole. As a result, the tab part is less likely to obstruct the housing from being sleeved onto the electrode assembly, and the tab part is also less likely to be damaged by collision with the housing or to fail to smoothly pass through the through hole. Thus, precise insertion of the electrode assembly into the housing is achieved, effectively improving the working stability and reliability of the tab-through device, effectively reducing the difficulty of battery assembly, and effectively enhancing both the assembly efficiency and the yield rate of the battery.

In some embodiments, the assembly apparatus includes a tab welding device, a post terminal welding device, and a bottom cover welding device. The tab welding device is configured to weld a plurality of tab plates of the electrode assembly to form the tab part; the post terminal welding device is configured to weld the tab part, which passes through the through hole, to one side of a post terminal of the housing that faces away from the accommodation chamber; the bottom cover welding device is configured to weld a bottom cover to the open end of the housing.

According to the above method, the arrangement of the tab welding device, the post terminal welding device, and the bottom cover welding device enables the assembly apparatus to realize the formation of the tab part, the connection between the tab part and the post terminal, and the connection between the bottom cover and the housing. This is beneficial for enhancing the connection stability of each structural part of the battery and improving the working stability and reliability of the battery.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic structural diagram of a vehicle according to one or more embodiments;
FIG. 2 is a schematic diagram of an exploded structure of a power supply battery according to one or more embodiments;
FIG. 3 is a schematic diagram of an exploded structure of a battery according to one or more embodiments;
FIG. 4 is a schematic structural diagram of an assembly apparatus according to one or more embodiments;
FIG. 5 is a schematic structural diagram of a battery assembly system according to one or more embodiments;
FIG. 6 is a schematic structural diagram of a tab-through device according to one or more embodiments;
FIG. 7 is a schematic structural diagram of a clamping mechanism shown in FIG. 6 in a releasing position;
FIG. 8 is a schematic structural diagram of the clamping mechanism shown in FIG. 6 in a clamping position;
FIG. 9 is another schematic structural diagram of the clamping mechanism shown in FIG. 6 in a releasing position;
FIG. 10 is another schematic structural diagram of the clamping mechanism shown in FIG. 6 in a clamping position;
FIG. 11 is a schematic diagram of an application scenario of the clamping mechanism shown in FIG. 6; and
FIG. 12 is another schematic diagram of an application scenario of the clamping mechanism shown in FIG. 6.

Reference numerals in the detailed description are as follows:
1000a vehicle;
100a power supply battery; 200a controller; 300a motor;
10a case; 11a first portion; 12a second portion;
F1 preset assembly direction; L1 preset rotation axis; A opening and closing angle;
1 battery; 10 housing; 11 accommodation chamber; 12 open end; 13 top part; 14 through hole; 15 post terminal; 20 electrode assembly; 21 tab part; 30 bottom cover; 2 tab-through device; 201 clamping space; 202 avoidance hole; 203 first rotating shaft accommodation hole; 204 second rotating shaft accommodation hole; 205 first end; 206 second end; 100 clamping mechanism; 110 first clamping member; 111 first clamping plate body; 112 first connecting part; 120 second clamping member; 121 second clamping plate body; 122 second connecting part; 130 rotating shaft; 140 pressing slider; 200 driving mechanism; 3 assembly apparatus; 40 housing-insertion device; 41 housing fixing mechanism; 42 carrying assembly; 50 tab welding device; 60 post terminal welding device; 70 bottom cover welding device; 80 pairing device; 4 conveying apparatus; 5 battery assembly system.

### DETAILED DESCRIPTION

The technical solutions in the embodiments of the present application will be clearly and completely described hereinafter with reference to the drawings in the embodiments of the present application. It is apparent that the described embodiments are only some, but not all, embodiments of the present application. All other embodiments obtained by those of ordinary skill in the art without creative efforts with respect to the embodiments in the present application shall fall within the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, technical terms such as "first" and "second" are only used to distinguish different objects and should not be interpreted as indicating or implying the relative importance or implicitly indicating the number, specific order, or primary and secondary relationship of the technical features referred to. In the description of the embodiments of the present application, unless otherwise specifically defined, "plurality of" means two or more.

Reference in the present application to "embodiment" means that a particular feature, structure, or characteristic described in combination with the embodiment can be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein can be combined with other embodiments.

In the description of the embodiments of the present application, the term "and/or" is merely a way to describe the associative relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, the technical terms "center", "longitudinal", "transverse", "length", "width", "thickness", "upper", "lower", "front", "rear", "left", "right", "vertical", "horizontal", "top", "bottom", "inner", "outer", "clockwise" "counterclockwise", "axial", "radial", "circumferential" and the like indicate orientations or positional relationships based on those shown in the drawings. They are merely for the convenience of describing the embodiments of the present application and simplifying the description, rather than indicating or implying that the device or element referred to must have a specific orientation or be constructed and operated in the specific orientation, and thus should not be construed as a limitation to the embodiments of the present application.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application can be interpreted according to specific conditions.

With the development of battery technology, batteries have been applied in an increasing number of fields and are gradually replacing traditional fossil energy in the automotive power sector. A battery can store chemical energy and can controllably convert the chemical energy into electric energy. In rechargeable batteries, after discharge, the active substance can be activated through charging for continued use.

A battery refers to a cup, trough, or other container-or part of the space within a composite container-that contains an electrolyte solution and metal electrodes to generate an electric current; it is a device capable of converting chemical energy into electric energy. With the development of science and technology, batteries which offer advantages such as ease of carrying, simple and convenient charging/discharging operations, and long-term stable power supply-have been widely applied in fields such as automobiles, household appliances, and aerospace.

The tab part of a battery is a metal conductor that leads the positive electrode and the negative electrode of the battery cell out of the housing; therefore, during the assembly process of the battery, the tab part of the battery needs to be led out of the housing to serve as the contact point for charging and discharging the battery. However, during the assembly process of the battery, when assembling the battery cell into the housing, the tab part is prone to bending inside the housing and cannot be extended out of the housing, making it difficult to smoothly complete the assembly between the battery cell and the housing. As a result, the assembly and manufacturing process of the battery becomes more difficult, and the yield rate of finished batteries becomes lower.

To achieve precise insertion of the electrode assembly into the housing and to smoothly extend the tab part from inside the housing to the outside, the tab part can be guided during the insertion of the electrode assembly into the housing, such that the tab part is smoothly extended from inside the housing to the outside.

Based on the above considerations, the present application provides a tab-through device and assembly apparatus for a battery. The battery includes a housing and an electrode assembly. The housing is provided with an accommodation chamber, and a through hole that communicates the accommodation chamber with the outside is formed in the housing. The electrode assembly is arranged in the accommodation chamber. The tab-through device is configured to guide the tab part of the electrode assembly to extend out of the through hole. The tab-through device includes a clamping mechanism and a driving mechanism. The clamping mechanism includes a first clamping member and a second clamping member that are movably connected, and a clamping space with an adjustable opening and closing angle is capable of being formed between the first clamping member and the second clamping member. The driving mechanism is in transmission connection with the first clamping member and/or the second clamping member, so as to drive the first clamping member and/or the second clamping member to move to adjust the opening and closing angle. The driving mechanism is configured to drive the first clamping member and/or the second clamping member to move, so that the first clamping member and the second clamping member are capable of clamping the tab part to pass through the through hole and extend out of the accommodation chamber. In this way, without affecting or damaging the housing, the tab part can be guided smoothly into the through hole, enabling the tab part to smoothly extend out of the housing. As a result, the tab part is less likely to obstruct the housing from being sleeved onto the electrode assembly, and the tab part is also less likely to be damaged by collision with the housing or to fail to smoothly pass through the through hole. Thus, precise insertion of the electrode assembly into the housing is achieved, effectively enhancing the working stability and reliability of the tab-through device, effectively reducing the assembly difficulty of the battery, and effectively improving the assembly efficiency and the yield rate of the battery.

The battery disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1000a as an example of the electric device according to an embodiment of the present application.

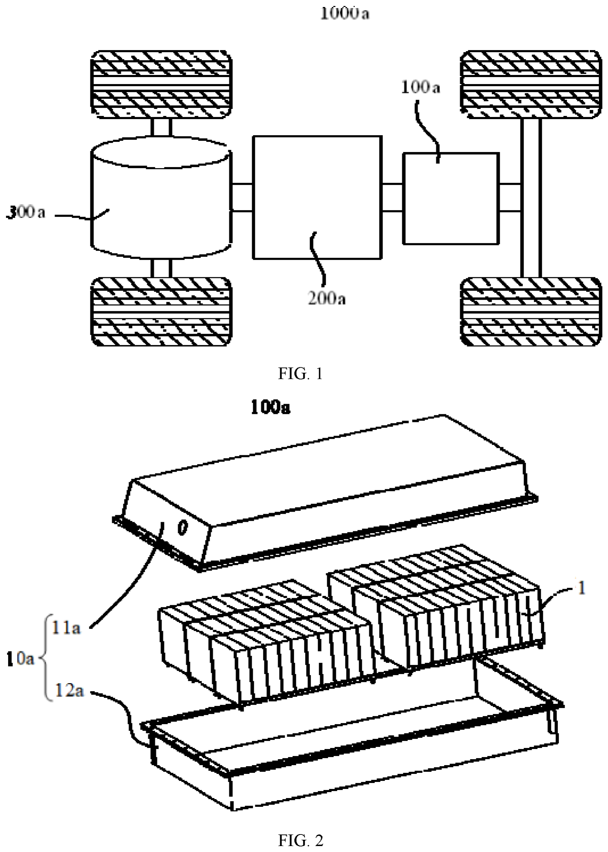

Referring to FIG. 1, a vehicle 1000a may be a fuel vehicle, a gas vehicle, or a new energy vehicle. The new energy vehicle may be a pure electric vehicle, a hybrid vehicle, an extended-range vehicle, or the like. A power supply battery 100a is arranged inside the vehicle 1000a, and the power supply battery 100a may be arranged at the bottom, head, or tail of the vehicle 1000a. The power supply battery 100a may be configured to power the vehicle 1000a. For example, the power supply battery 100a may serve as an operation power source for the vehicle 1000a. The vehicle 1000a may further include a controller 200a and a motor 300a. The controller 200a is configured to control the power supply battery 100a to supply power to the motor 300a, e.g., for the operation power needed by the vehicle 1000a for start-up, navigation, and driving.

In some embodiments of the present application, the power supply battery 100a may not only serve as an operation power source for the vehicle 1000a, but also as a driving power source for the vehicle 1000a, replacing or partially replacing fuel or natural gas, to provide driving power for the vehicle 1000a.

In some embodiments, the power supply battery 100a may be an energy storage device. The energy storage device includes an energy storage container, an energy storage electrical cabinet, and the like.

The power supply battery 100a mentioned in the embodiments of the present application refers to a single physical module including one or a plurality of batteries 1 to provide higher voltage and capacity.

In the embodiments of the present application, the battery 1 may be a secondary battery, which refers to a battery that may be continuously used by activating the active material by charging after the battery discharges. Each battery 1 may also be a primary battery.

The battery 1 includes, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, or a lead storage battery. The battery 1 may be cylindrical, flat, rectangular parallelepiped, or in other shapes.

In some embodiments, the power supply battery 100a may be a battery module, and when a plurality of batteries 1 are provided, the plurality of batteries 1 are arranged and fixed to form one battery module.

In some embodiments, referring to FIG. 2, the power supply battery 100a may be a battery pack. The battery pack includes a case 10a and a battery 1, and the battery 1 or the battery module is accommodated in the case 10a.

In some embodiments, the case 10a may be a portion of the chassis structure of the vehicle 1000a. For example, a portion of the case 10a may become at least a portion of the floor of the vehicle 1000a, or a portion of the case 10a may become at least a portion of a transverse beam and a longitudinal beam of the vehicle 1000a.

Referring to FIG. 2, the power supply battery 100a includes a case 10a and a battery 1, and the battery 1 is accommodated within the case 10a. The case 10a is configured to provide an accommodating space for the battery 1, and the case 10a may be of a variety of structures. In some embodiments, the case 10a may include a first portion 11a and a second portion 12a. The first portion 11a and the second portion 12a are mutually lidded onto each other, and the first portion 11a and the second portion 12a jointly define an accommodating space for accommodating the battery 1. The second portion 12a may be of a hollow structure with one end open, and the first portion 11a may be of a plate-shaped structure. The first portion 11a is lidded onto the open side of the second portion 12a, such that the first portion 11a and the second portion 12a jointly define the accommodating space. The first portion 11a and the second portion 12a may also each be of a hollow structure with one side open, and the open side of the first portion 11a is lidded onto the open side of the second portion 12a. Certainly, the case 10a formed by the first portion 11a and the second portion 12a may be in various shapes, such as cylindrical and rectangular parallelepiped.

In the power supply battery 100a, there may be a plurality of batteries 1, and the plurality of batteries 1 may be connected in series, in parallel, or in series-parallel. The series-parallel connection means that both series connection and parallel connection are present for the connection among the plurality of batteries 1. The plurality of batteries 1 may be directly connected in series, in parallel, or in series-parallel, and then the whole formed by the plurality of batteries 1 is accommodated in the case 10a. Certainly, the situation may also be that in the power supply battery 100a, a plurality of batteries 1 are first connected in series, in parallel, or in series-parallel to form battery modules, and then the plurality of battery modules are connected in series, in parallel, or in series-parallel to form a whole and accommodated in the case 10a. The power supply battery 100a may further include other structures. For example, the power supply battery 100a may further include a busbar component for achieving the electrical connection among the plurality of batteries 1.

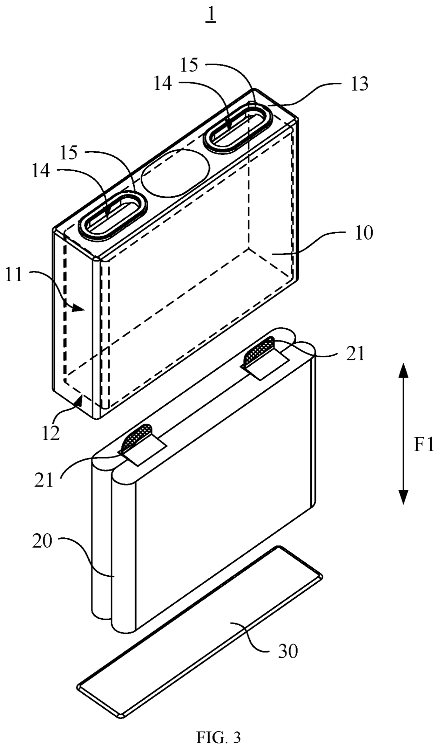

Referring to FIG. 3, the battery 1 refers to the smallest unit constituting the battery. As shown in FIG. 3, the battery 1 includes a housing 10, an electrode assembly 20, and other functional components.

In some embodiments, the housing 10 is configured to encapsulate the electrode assembly 20, the electrolyte, and other components. The housing 10 may be a steel housing, an aluminum housing, a plastic housing (such as polypropylene), a composite metal housing (such as a copper-aluminum composite housing), an aluminum-plastic film, or the like.

The battery 1 further includes a bottom cover 30. The bottom cover 30 refers to a component that is lidded onto the opening of the housing 10 to isolate the internal environment of the battery 1 from the external environment. Without limitation, the shape of the bottom cover 30 may be adapted to the shape of the housing 10 to match the housing 10. Optionally, the bottom cover 30 may be made of a material with a certain hardness and strength (for example, an aluminum alloy), such that the bottom cover 30 is not easily deformed when being squeezed or collided. This enables the battery 1 to have higher structural strength, and the safety performance can also be improved. The bottom cover 30 may also be made of various materials, for example, including but not limited to copper, iron, aluminum, stainless steel, aluminum alloy, and plastic. In some embodiments, an insulating component may also be provided on the inner side of the bottom cover 30, and the insulating component may be configured to isolate an electrical connection component in the housing 10 from the bottom cover 30 to reduce the risk of a short circuit. Illustratively, the insulating component may be made of plastic, rubber, or the like.

The housing 10 is an assembly configured in conjunction with the bottom cover 30 to form the internal environment of the battery 1. The formed internal environment can be used to accommodate the electrode assembly 20, the electrolytic solution, and other components. The housing 10 and the bottom cover 30 may be independent components. An open end 12 may be formed in the housing 10, and the bottom cover 30 is lidded onto the open end 12 to form the internal environment of the battery 1. Without limitation, the bottom cover 30 and the housing 10 may be integrated. Specifically, the bottom cover 30 and the housing 10 may form a common connection surface before other components are placed in the housing, and when the interior of the housing 10 needs to be encapsulated, the bottom cover 30 is lidded onto the housing 10. The housing 10 may be in various shapes and sizes, such as a rectangular parallelepiped, a cylinder, and a hexagonal prism. Specifically, the shape of the housing 10 may be determined according to the specific shape and size of the electrode assembly 20. The housing 10 may be made of various materials, for example, including but not limited to copper, iron, aluminum, stainless steel, aluminum alloy, and plastic. Functional components, such as electrode terminals, may be arranged on the housing 10. The electrode terminals may be configured to electrically connect with the electrode assembly 20 for outputting or inputting electric energy of the battery 1. In some embodiments, the housing 10 may also be provided with a pressure relief mechanism for releasing the internal pressure when the internal pressure or temperature of the battery 1 reaches a threshold.

The electrode assembly 20 is a component where the electrochemical reaction occurs in the battery 1. One or more electrode assemblies 20 may be accommodated in the housing 10.

In some embodiments, the electrode assembly 20 includes a positive electrode, a negative electrode, and a separator. During the charging and discharging process of the battery, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in a thickness direction thereof, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO4 (also referred to as LFP)), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO2), a lithium nickel oxide (such as LiNiO2), a lithium manganese oxide (such as LiMnO2 or LiMn2O4), a lithium nickel cobalt oxide, a lithium manganese cobalt oxide, a lithium nickel manganese oxide, a lithium nickel cobalt manganese oxide (such as LiNi1/3Co1/3Mn1/3O2 (also referred to as NCM333), LiNi0.5Co0.2Mn0.3O2 (also referred to as NCM523), LiNi0.5Co0.25Mn0.25O2 (also referred to as NCM211), LiNi0.6Co0.2Mn0.2O2 (also referred to as NCM622), LiNi0.8Co0.1Mn0.1O2 (also referred to as NCM811)), a lithium nickel cobalt aluminum oxide (such as LiNi0.85Co0.15A10.05O2), and modified compounds thereof.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector has two surfaces opposite to each other in a thickness direction thereof, and the negative electrode active material is disposed on either or both of the two opposite surfaces of the negative electrode current collector.

As an example, the negative electrode active material may be a negative electrode active material known in the art for use in batteries. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

In some embodiments, the material of the positive electrode current collector may be aluminum, and the material of the negative electrode current collector may be copper.

In some embodiments, the electrode assembly 20 further includes a separator disposed between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene difluoride, and ceramic. The separation film may be a single-layer film or a multi-layer composite film, and there is no particular limitation on this. When the separation film is a multi-layer composite film, the materials of the layers may be the same or different, and there is no particular limitation on this. The separator may be a separate component located between the positive electrode and the negative electrode, or may be attached to the surfaces of the positive electrode and the negative electrode.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery 1 further includes an electrolyte that serves to conduct ions between the positive electrode and the negative electrode. The present application has no specific limitations on the type of the electrolyte, which can be selected according to needs. The electrolyte may be liquid-state, gel-state, or solid-state.

The liquid-state electrolyte includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may be one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur, argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly 20 is of a wound structure. The positive electrode plate and the negative electrode plate are wound to form a wound structure.

In some embodiments, the electrode assembly 20 is provided with a tab part 21, and the tab part 21 can conduct current out from the electrode assembly 20. The tab part 21 includes a positive electrode tab and a negative electrode tab. The positive electrode tab and the negative electrode tab may be located together at one end of the main body part or separately at two ends of the main body part. During the charging and discharging process of the power supply battery 100a, the positive electrode active substance and the negative electrode active substance react with the electrolytic solution, and the tab part 21 is connected to the electrode terminal to form a current circuit.

According to some embodiments of the present application, as shown in FIG. 3, the battery 1 may include a housing 10 and an electrode assembly 20. The housing 10 may be provided with an accommodation chamber 11 and an open end 12 that communicates with the accommodation chamber 11. The housing 10 is further provided with a top part 13 arranged opposite to the open end 12. The top part 13 may be provided with through holes 14 that communicate the accommodation chamber 11 with the outside. One end of the electrode assembly 20 may be provided with tab parts 21. The housing 10 is configured to sleeve the electrode assembly 20 via the open end 12 in a preset assembly direction F1, so that the electrode assembly 20 is accommodated within the accommodation chamber 11, and the tab parts 21 pass through the through holes 14.

Optionally, as shown in FIG. 3, the housing 10 may include post terminals 15. The post terminal 15 may be arranged on the top part 13 of the housing 10, and the through hole 14 may be formed in the post terminal 15. The active substance-coated part of the electrode assembly 20 is arranged within the housing 10, and the tab part 21 of the electrode assembly 20 may pass through the through hole 14 to connect to one side of the post terminal 15 facing away from the accommodation chamber 11, thereby outputting electric energy from the electrode assembly 20 to the outside of the battery 1. The housing 10 may accommodate the electrode assembly 20 by sleeving the electrode assembly 20 through the open end 12.

Optionally, as shown in FIG. 3, the battery 1 may further include a bottom cover 30. The bottom cover 30 is configured to cover the open end 12, such that the electrode assembly 20 is not prone to falling out from the open end 12 after being inserted into the housing.

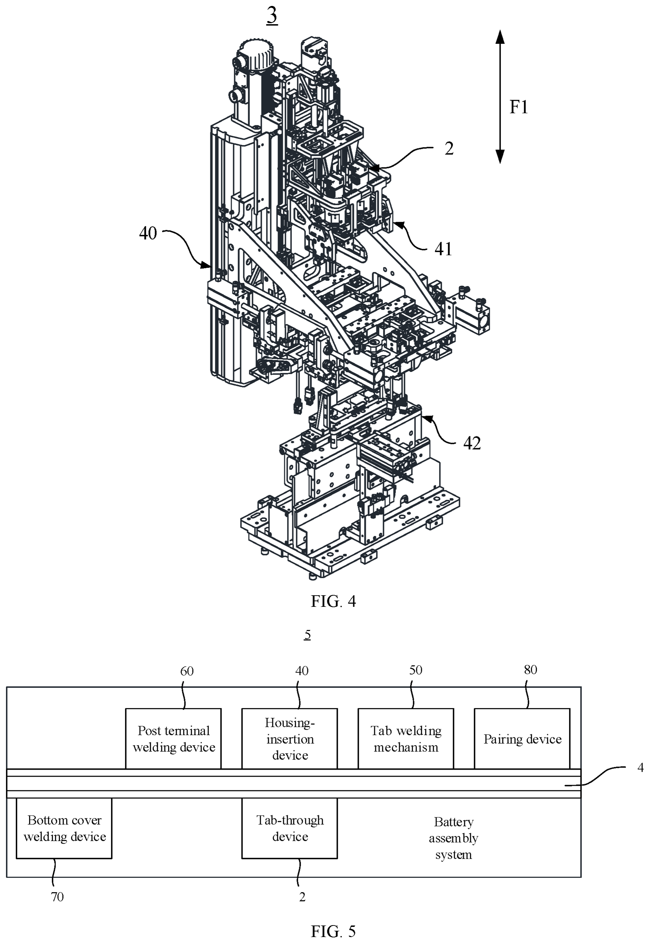

According to some embodiments of the present application, optionally, as shown in FIG. 4, the assembly apparatus 3 includes a housing-insertion device 40 and a tab-through device 2. The housing-insertion device 40 is configured to assemble the electrode assembly 20 into the housing 10 from the open end 12 of the housing 10. The housing-insertion device 40 includes a housing fixing mechanism 41 and a carrying assembly 42. The housing fixing mechanism 41 is configured to fix the housing 10, and the carrying assembly 42, in the preset assembly direction F1, is located below the housing fixing mechanism 41 and the tab-through device 2, and is configured to carry the electrode assembly 20.

Optionally, the electrode assembly 20 and the bottom cover 30 may be sequentially stacked on the carrying assembly 42 according to the preset assembly direction F1, such that after the electrode assembly 20 is inserted into the housing, the bottom cover 30 can cover the open end 12. The carrying assembly 42 may also further fix the electrode assembly 20 and the bottom cover 30 to reduce the occurrence of displacement of the electrode assembly 20 during transportation or the housing insertion process.

The housing fixing mechanism 41 and the tab-through device 2 are configured to be capable of moving relative to the carrying assembly 42, and specifically, may move up and down in the preset assembly direction F1, so as to correspond to moving away from or toward the carrying assembly 42. Before clamping the tab part 21, the tab-through device 2 is configured to be capable of passing through the through hole 14 and enter the accommodation chamber 11, and the housing fixing mechanism 41 is configured to sleeve the housing 10 onto the electrode assembly 20. Specifically, the housing fixing mechanism 41 sleeves the housing 10 onto the electrode assembly 20 during the downward movement. During the process of sleeving the housing 10 onto the electrode assembly 20, the tab-through device 2 can guide the tab part 21 to pass through the through hole 14.

Furthermore, the process of sleeving the housing 10 onto the electrode assembly 20 includes a first stage and a second stage arranged in sequential order. In the first stage, the housing fixing mechanism 41 and the tab-through device 2 are configured to be capable of moving down together relative to the carrying assembly 42 along a preset assembly direction F1, such that the tab-through device 2 can contact the tab part 21 within the accommodation chamber 11. In the second stage, the housing fixing mechanism 41 is configured to be capable of descending relative to the tab-through device 2 in the preset assembly direction F1, so that the tab-through device 2 guides the tab part 21 to pass through the through hole 14. Prior to the first stage, the tab-through device 2 is configured to be capable of moving down relative to the housing fixing mechanism 41 along the preset assembly direction F1, such that the tab-through device passes through the through hole 14 from the side of the top part 13 into the accommodation chamber 11, and, during the first stage, moves down together with the housing fixing mechanism 41 relative to the carrying assembly 42.

According to the above method, when sleeving the housing 10 of the battery 1 onto the electrode assembly 20, the tab part 21 of the battery 1 can be smoothly guided to pass through the through hole 14, enabling the tab part 21 to smoothly extend out of the housing 10. As a result, the tab part 21 is less likely to obstruct the housing 10 from being sleeved onto the electrode assembly 20, and the tab part 21 is also less likely to be damaged by collision with the housing 10 or to fail to smoothly pass through the through hole 14. Thus, precise insertion of the electrode assembly 20 into the housing is achieved, effectively improving the working stability and reliability of the tab-through device 2, effectively reducing the difficulty of battery 1 assembly, and effectively enhancing both the assembly efficiency and the yield rate of the battery 1.

Optionally, as shown in FIG. 5, in some embodiments, the assembly apparatus 3 includes a tab welding device 50, a post terminal welding device 60, and a bottom cover welding device 70. The tab welding device 50 is configured to weld a plurality of tab plates of the electrode assembly 20 to form the tab part 21; the post terminal welding device 60 is configured to weld the tab part 21, which passes through the through hole 14, to one side of the post terminal 15 of the housing 10 that faces away from the accommodation chamber 11; and the bottom cover welding device 70 is configured to weld the bottom cover 30 to the open end 12 of the housing 10.

According to the above method, the arrangement of the tab welding device 50, the post terminal welding device 60, and the bottom cover welding device 70 enables the assembly apparatus 3 to realize the formation of the tab part 21, the connection between the tab part 21 and the post terminal 15, and the connection between the bottom cover 30 and the housing 10. This is beneficial for enhancing the connection stability of each structural part of the battery 1 and enhancing the working stability and reliability of the battery 1.

It should be noted that, in this embodiment, structures to be assembled can be conveyed by the conveying apparatus 4 among the stations of the assembly apparatus 3. The conveying apparatus 4 and the assembly apparatus 3 together form the battery assembly system 5. The conveying apparatus 4 includes a conveyor line, which may be a conveying structure formed by conveyor rollers driven by a motor together with a conveyor belt, a conveying structure formed by conveyor chain links driven by a motor and hinged together, or an AGV conveying cart. This conveyor line can realize conveying in at least one direction and can support and ensure the stability of the structure to be assembled.

The purpose of the tab welding device 50 is to enable the formation of the tab part 21 after the pre-welding of the tab plates. The tab welding device may optionally be an ultrasonic welding apparatus, which can ensure that the tab plates are welded under a stable clamped state. The purpose of the post terminal welding device 60 is to realize the welding between the tab part 21 and the pole terminal 15. The post terminal welding device may optionally be a laser welding apparatus. The purpose of the bottom cover welding device 70 is to realize circumferential edge welding of the bottom cover 30 and the open end 12 of the housing 10. The bottom cover welding device is also a laser welding apparatus.

In addition, the assembly apparatus 3 is not limited to including the tab welding device 50, the housing-insertion device 40, the tab-through device 2, the post terminal welding device 60, and the bottom cover welding device 70. Illustratively, when there are a plurality of electrode assemblies 20, for example, when there are two electrode assemblies, the assembly apparatus 3 further includes a pairing device 80. The pairing device 80 is configured to arrange the plurality of electrode assemblies 20 in a stacking manner, such that the tab plates of the two electrode assemblies 20 are approximately opposite. This facilitates the conveying structure in conveying the paired electrode assemblies 20 to the tab welding device 50 for welding of the tab plates, thus facilitating the formation of the tab part 21. Further illustratively, to ensure reliability in the battery assembly process, dust removal stations, NG detection stations, etc., may be added between any two adjacent stations, which is not limited in this embodiment.

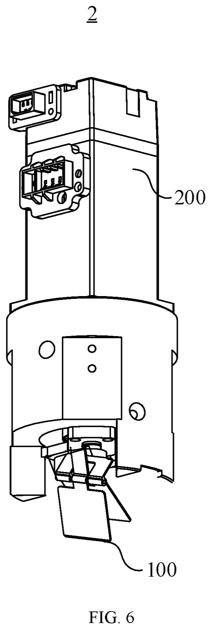

According to some embodiments of the present application, as shown in FIG. 6, the tab-through device 2 includes a clamping mechanism 100 and a driving mechanism 200. The clamping mechanism 100 includes a first clamping member 110 and a second clamping member 120 that are movably connected, and a clamping space 201 with an adjustable opening and closing angle A can be formed between the first clamping member 110 and the second clamping member 120. The driving mechanism 200 is in transmission connection with the first clamping member 110 and/or the second clamping member 120, so as to drive the first clamping member 110 and/or the second clamping member 120 to move to adjust the opening and closing angle A, so that the first clamping member 110 and/or the second clamping member 120 can clamp the tab part 21 to pass through the through hole 14 and extend out of the accommodation chamber 11.

In some embodiments, the driving mechanism 200 is in transmission connection with the first clamping member 110, so as to drive the first clamping member 110 to rotate relative to a second clamping plate to adjust the opening and closing angle A. In some embodiments, the driving mechanism 200 is in transmission connection with the second clamping member 120, so as to drive the second clamping member 120 to rotate relative to a first clamping plate to adjust the opening and closing angle A. In some embodiments, the driving mechanism 200 is in transmission connection with the first clamping member 110 and the second clamping member 120, so as to drive the first clamping member 110 and the second clamping member 120 to rotate relatively to adjust the opening and closing angle A.

The first clamping member 110 and the second clamping member 120 are configured to pass through the through hole 14 and extend into the accommodation chamber 11 before clamping the tab part 21. During the process of sleeving the housing 10 onto the electrode assembly 20, the driving mechanism 200 is configured to drive the clamping mechanism 100 to adjust the opening and closing angle A to clamp the tab part 21, so as to clamp the tab part 21 to pass through the through hole 14.

During the process of sleeving the housing 10 onto the electrode assembly 20, the driving mechanism 200 is configured to drive the first clamping member 110 and the second clamping member 120 to clamp the tab part 21 in the accommodation chamber 11, so as to clamp the tab part 21 to pass through the through hole 14. The driving mechanism 200 may include a motor, which provides power for the clamping mechanism 100 to clamp the tab part 21. The motor may be a direct current motor or an alternating current motor.

According to the above method, through the arrangement of a clamping mechanism 100 that can extend into the accommodation chamber 11 to clamp the tab part 21 and a driving mechanism 200 in transmission connection with the first clamping member 110 and/or the second clamping member 120, it is possible, during the assembly process of the battery 1, when the housing 10 is sleeved onto the electrode assembly 20 to enable the electrode assembly 20 to be accommodated in the accommodation chamber 11, for the driving mechanism 200 to drive the first clamping member 110 and/or the second clamping member 120 to move, so as to adjust the opening and closing angle A to clamp the tab part 21. Without affecting or damaging the housing 10, the tab part 21 can be guided smoothly into the through hole 14, enabling the tab part 21 to smoothly extend out of the housing 10. As a result, the tab part 21 is less likely to obstruct the housing 10 from being sleeved onto the electrode assembly 20, and the tab part 21 is also less likely to be damaged by collision with the housing 10 or to fail to smoothly pass through the through hole 14. Thus, precise insertion of the electrode assembly 20 into the housing is achieved, effectively improving the working stability and reliability of the tab-through device 2, effectively reducing the difficulty of battery 1 assembly, and effectively enhancing both the assembly efficiency and the yield rate of the battery 1.

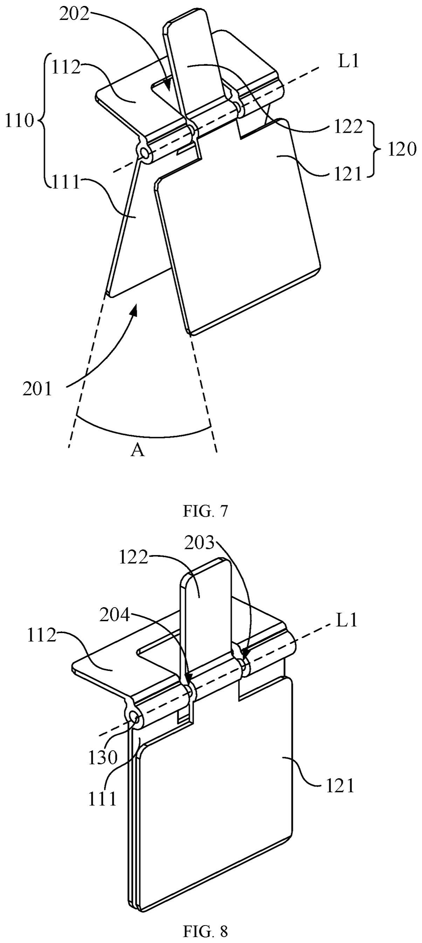

According to some embodiments of the present application, optionally, as shown in FIG. 7, the first clamping member 110 and/or the second clamping member 120 are configured to be rotatable about a preset rotation axis L1.

In some embodiments, the first clamping member 110 is configured to be rotatable about the preset rotation axis L1, and the second clamping member 120 maintains a fixed posture. In some embodiments, the second clamping member 120 is configured to be rotatable about the preset rotation axis L1, and the first clamping member 110 maintains a fixed posture. In some embodiments, the first clamping member 110 and the second clamping member 120 are configured to be rotatable about the preset rotation axis L1, and the two can simultaneously rotate to adjust the opening and closing angle A.

According to the above method, the opening and closing angle A of the clamping space 201 can be adjusted by using the rotation of the first clamping member 110 and/or the second clamping member 120. When the opening and closing angle A is relatively small, it is convenient for the tab part 21 to extend into the clamping space 201; when the opening and closing angle A is relatively large, it is convenient for the first clamping member 110 and the second clamping member 120 to clamp the tab part 21, thereby facilitating the clamping mechanism 100 to smoothly clamp the tab part 21. Such a structure is simple and easy to operate, which is beneficial for improving the clamping efficiency of the clamping mechanism 100 and effectively enhances the working reliability of the clamping assembly.

Further, the preset rotation axis L1 is arranged to be parallel to the top part 13 or perpendicular to the axis of the through hole 14.

According to the above method, through the arrangement of the preset rotation axis L1 that is parallel to the top part 13 or perpendicular to the axis of the through hole 14, it is convenient for the clamping mechanism 100 to position the tab part 21 by using the first clamping member 110 and the second clamping member 120 when clamping the tab part. In addition, when clamping the tab part 21 and guiding the tab part 21, the clamping mechanism 100 only needs to adjust the opening and closing angle A and move in the preset assembly direction F1, without additionally adjusting the angle or posture of the entire clamping mechanism 100 relative to the tab part 21, which is beneficial for reducing the possibility of damaging the tab part 21 and improving the clamping efficiency of the clamping mechanism 100, and effectively improves the working reliability of the clamping assembly.

According to some embodiments of the present application, optionally, as shown in FIGs. 7 and 8, the first clamping member 110 includes a first clamping plate body 111 and a first connecting part 112, and the first clamping plate body 111 is connected to the first connecting part 112; the second clamping member 120 includes a second clamping plate body 121 and a second connecting part 122, and the second clamping plate body 121 is connected to the second connecting part 122. The first clamping plate body 111 and the first connecting part 112 are connected in a bending manner. A bending joint between the first clamping plate body 111 and the first connecting part 112 is rotatably connected to the second connecting part 122 and/or the second clamping plate body 121. The clamping space 201 is formed between the first clamping plate body 111 and the second clamping plate body 121. An included angle between the first clamping plate body 111 and the second clamping plate body 121 is formed as the opening and closing angle A. The driving mechanism 200 is in transmission connection with the first connecting part 112 and/or the second connecting part 122, so as to drive the first clamping plate body 111 and/or the second clamping plate body 121 to rotate to adjust the opening and closing angle A.

According to the above method, the first clamping member 110 is configured to include the first clamping plate body 111 and the first connecting part 112, and the second clamping member 120 is configured to include the second clamping plate body 121 and the second connecting part 122, so that the first clamping plate body 111 and the second clamping plate body 121 are used to clamp the tab part 21, and the first connecting part 112 and/or the second connecting part 122 are used to drive and adjust the opening and closing angle A, thereby achieving the precise control of the clamping mechanism 100 while improving the structural stability, effectively improving the clamping efficiency of the clamping mechanism 100, and effectively improving the working reliability of the clamping assembly.

According to some embodiments of the present application, optionally, as shown in FIG. 7, the first clamping member 110 is provided with an avoidance hole 202 penetrating through two side surfaces thereof. The avoidance hole 202 spans the first connecting part 112 and the first clamping plate body 111 via the bending joint. During the rotation process of the first clamping plate body 111 and/or the second clamping plate body 121, the avoidance hole 202 is configured to avoid the second connecting part 122.

According to the above method, through the arrangement of an avoidance hole 202 to provide space for relative rotation between the second clamping member 120 and the first clamping member 110, it is convenient to clamp the tab part 21 by adjusting the opening and closing angle A, achieving the precise control of the clamping mechanism 100 while improving the structural stability, effectively improving the clamping efficiency of the clamping mechanism 100, and effectively improving the working reliability of the clamping assembly.

According to some embodiments of the present application, optionally, as shown in FIG. 8, a first rotating shaft accommodation hole 203 is formed in the bending joint on both sides of the avoidance hole 202, and a second rotating shaft accommodation hole 204 is formed in the second connecting part 122; the clamping mechanism 100 includes a rotating shaft 130, and the rotating shaft 130 is provided in the first rotating shaft accommodation hole 203 and the second rotating shaft accommodation hole 204 in a penetrating manner.

According to the above method, the rotating shaft 130 is provided in the first rotating shaft accommodation hole 203 and the second rotating shaft accommodation hole 204 in a penetrating manner, so that connection and relative rotation between the first clamping member 110 and the second clamping member 120 can be achieved, and the opening and closing angle A can be adjusted while ensuring the structural stability, facilitating the improvement in the clamping efficiency of the clamping mechanism 100, and effectively improving the working reliability of the clamping assembly.

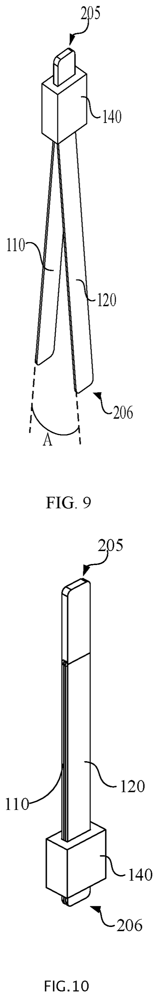

According to some embodiments of the present application, optionally, as shown in FIG. 9, a first end 205 of the first clamping member 110 and a first end 205 of the second clamping member 120 are connected to each other, and the first clamping member 110 and/or the second clamping member 120 are/is configured to be capable of elastically deflecting about a joint therebetween, so that the first clamping member 110 and the second clamping member 120 are rotatably connected. The clamping mechanism 100 further includes a pressing slider 140. The pressing slider 140 is slidably sleeved onto the first clamping member 110 and the second clamping member 120.

Further, as shown in FIG. 9, when the pressing slider 140 is in a releasing position, the first clamping member 110 and the second clamping member 120, in a direction from the first end 205 to a second end 206, are arranged at an included angle in an open manner, so as to form the clamping space 201. The driving mechanism 200 is in transmission connection with the pressing slider 140, and is configured to drive the pressing slider 140 to slide along the first clamping member 110 and the second clamping member 120, so that the opening and closing angle A can be changed through the pressing slider 140. When the pressing slider 140 is in a clamping position, as shown in FIG. 10, the first clamping member 110 and the second clamping member 120 are pressed by the pressing slider 140, so that the opening and closing angle A decreases.

According to the above method, the driving mechanism 200 drives the pressing slider 140 to slide, so that the opening and closing angle A of the clamping mechanism 100 can be adjusted. Such a structure is simple, easy to operate, and highly stable, which is beneficial for improving the working stability and reliability of the tab-through device 2.

According to some embodiments of the present application, optionally, as shown in FIGs. 7 and 9, the first clamping member 110 and the second clamping member 120 are arranged in a sheet shape, and the first clamping member 110 and the second clamping member 120 are arranged opposite to each other.

According to the above method, the first clamping member 110 and the second clamping member 120 are arranged in a sheet shape, which can provide conditions for adjusting the opening and closing angle A while reducing the manufacturing cost, effectively reduce the possibility that the first clamping member 110 and the second clamping member 120 are too thick to provide a sufficient opening and closing angle A, effectively improve the working effectiveness of the clamping mechanism 100, and facilitate the clamping mechanism 100 to smoothly clamp the tab part 21.

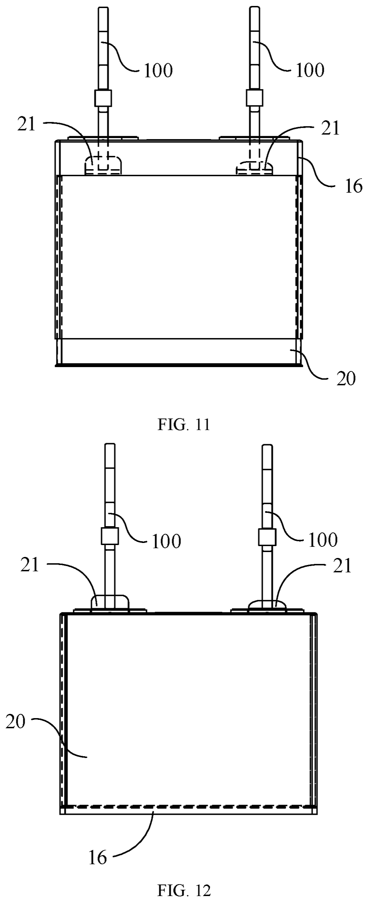

According to some embodiments of the present application, optionally, as shown in FIG. 11, the process of sleeving the housing 10 onto the electrode assembly 20 includes a first stage. In the first stage, the first clamping member 110 and the second clamping member 120 are configured to be capable of moving together with the housing 10 relative to the electrode assembly 20, so that the tab part 21 enters the clamping space 201, and the driving mechanism 200 drives the first clamping member 110 and the second clamping member 120 to reduce the opening and closing angle A to clamp the tab part 21.

According to the above method, the first clamping member 110 and the second clamping member 120 move together with the housing 10 relative to the electrode assembly 20 in the first stage, so that the tab part 21 can enter the clamping space 201 between the first clamping member 110 and the second clamping member 120 as the electrode assembly 20 is gradually inserted into the housing. In this way, the tab part 21 can be smoothly clamped, and the clamping efficiency of the clamping mechanism 100 and the assembly efficiency of the battery 1 can be effectively improved.

According to some embodiments of the present application, optionally, as shown in FIG. 12, the process of sleeving the housing 10 onto the electrode assembly 20 includes a second stage following the first stage. In the second stage, the first clamping member 110 and the second clamping member 120 are configured to be capable of moving relative to the housing 10 in directions away from each other while keeping clamping the tab part 21, so that the tab part 21 passes through the through hole 14.

According to the above method, the first clamping member 110 and the second clamping member 120 move relative to the housing 10 in directions away from each other in the second stage, and the clamping on the tab part 21 is maintained, so that the tab part 21 can be guided into the through hole 14 as the electrode assembly 20 is further inserted into the housing. This makes the assembly process smooth and clear, effectively improving the efficiency of the tab part 21 passing through the through hole 14 and the assembly efficiency of the battery 1.

According to some embodiments of the present application, optionally, as shown in FIGs. 7 and 8, the driving mechanism 200 is configured to drive the first clamping member 110 and/or the second clamping member 120 to rotate, so that the relative position between the first clamping member 110 and the second clamping member 120 can be switched between the clamping position and the releasing position. The opening and closing angle A in the clamping position is less than the opening and closing angle A in the releasing position. Prior to the first stage, the first clamping member 110 and the second clamping member 120 are configured to be capable of moving relative to the housing 10 to move toward the housing 10, and the driving mechanism 200 is configured to drive the first clamping member 110 and/or the second clamping member 120 to switch to the clamping position, so that the first clamping member 110 and the second clamping member 120 can pass through the through hole 14 and extend into the accommodation chamber 11. The driving mechanism 200 is configured to drive the first clamping member 110 and/or the second clamping member 120 to rotate after the first clamping member 110 and the second clamping member 120 extend into the space of the accommodation chamber 11, so as to switch the relative position from the clamping position to the releasing position.

In some embodiments, the driving mechanism 200 is configured to drive the first clamping member 110 and the second clamping member 120 to rotate, so that the relative position between the first clamping member 110 and the second clamping member 120 can be switched between the clamping position and the releasing position. When in the clamping position, the first clamping member 110 is in a first clamping position, and the second clamping member is in a second clamping position. When in the releasing position, the first clamping member is in a first releasing position, and the second clamping member is in a second releasing position. In some embodiments, the driving mechanism 200 is configured to drive the first clamping member 110 to rotate, so that the relative position between the first clamping member 110 and the second clamping member 120 can be switched between the clamping position and the releasing position. When in the clamping position, the first clamping member 110 is in the first clamping position, and the second clamping member is in the second clamping position. When in the releasing position, the first clamping member is in the first releasing position, and the second clamping member maintains the second clamping position. In some embodiments, the driving mechanism 200 is configured to drive the second clamping member 120 to rotate, so that the relative position between the first clamping member 110 and the second clamping member 120 can be switched between the clamping position and the releasing position. When in the clamping position, the first clamping member 110 is in the first clamping position, and the second clamping member is in the second clamping position. When in the releasing position, the first clamping member maintains the first clamping position, and the second clamping member is in the second releasing position.

According to the above method, the clamping mechanism 100 in the clamping position in the first stage can smoothly pass through the through hole 14 and extend into the accommodation chamber 11. Compared with the clamping mechanism 100 in the releasing position that passes through the through hole 14, this can effectively reduce the occupied space of the clamping mechanism 100 and reduce the area of the required through hole 14, enabling the first clamping member 110 and the second clamping member 120 to smoothly pass through the through hole 14, and effectively improving the space utilization rate. Moreover, after the clamping mechanism 100 extends into the accommodation chamber 11 and switches from the clamping position to the releasing position, the tab part 21 can easily enter the clamping space 201 of the clamping mechanism 100, thereby facilitating the clamping of the tab part 21 and effectively enhancing the working reliability of the tab-through device 2.

According to some embodiments of the present application, optionally, as shown in FIGs. 3 to 8, the battery 1 includes a housing 10 and an electrode assembly 20, and the housing 10 is provided with an accommodation chamber 11 and through holes 14 that communicate the accommodation chamber 11 with the outside. The electrode assembly 20 is arranged in the accommodation chamber 11. The tab-through device 2 is configured to guide tab parts 21 of the electrode assembly 20 to extend out of the through holes 14. The tab-through device 2 includes a clamping mechanism 100 and a driving mechanism 200. The clamping mechanism 100 includes a first clamping member 110 and a second clamping member 120 that are movably connected, and a clamping space 201 with an adjustable opening and closing angle A can be formed between the first clamping member 110 and the second clamping member 120. The driving mechanism 200 is in transmission connection with the first clamping member 110 and the second clamping member 120, so as to drive the first clamping member 110 and/or the second clamping member 120 to move to adjust the opening and closing angle A. The driving mechanism 200 is configured to drive the first clamping member 110 and/or the second clamping member 120 to move, so that the first clamping member 110 and the second clamping member 120 can clamp the tab part 21 to pass through the through hole 14 and extend out of the accommodation chamber 11. The first clamping member 110 and/or the second clamping member 120 are configured to be rotatable about a preset rotation axis L1. The preset rotation axis L1 is arranged to be perpendicular to the axis of the through hole 14. The first clamping member 110 includes a first clamping plate body 111 and a first connecting part 112, and the first clamping plate body 111 is connected to the first connecting part 112; the second clamping member 120 includes a second clamping plate body 121 and a second connecting part 122, and the second clamping plate body 121 is connected to the second connecting part 122. The first clamping plate body 111 and the first connecting part 112 are connected in a bending manner. A bending joint between the first clamping plate body 111 and the first connecting part 112 is rotatably connected to the second connecting part 122 and/or the second clamping plate body 121. The clamping space 201 is formed between the first clamping plate body 111 and the second clamping plate body 121. An included angle between the first clamping plate body 111 and the second clamping plate body 121 is formed as the opening and closing angle A. The driving mechanism 200 is in transmission connection with the first connecting part 112 and/or the second connecting part 122, so as to drive the first clamping plate body 111 and/or the second clamping plate body 121 to rotate to adjust the opening and closing angle A. The first clamping member 110 is provided with an avoidance hole 202 penetrating through two side surfaces thereof. The avoidance hole 202 spans the first connecting part 112 and the first clamping plate body 111 via the bending joint. During the rotation process of the first clamping plate body 111 and/or the second clamping plate body 121, the avoidance hole 202 is configured to avoid the second connecting part 122. A first rotating shaft 130 accommodation hole 203 is formed in the bending joint on both sides of the avoidance hole 202, and a second rotating shaft accommodation hole 204 is formed in the second connecting part 122; the clamping mechanism 100 includes a rotating shaft, and the rotating shaft is provided in the first rotating shaft 130 accommodation hole 203 and the second rotating shaft accommodation hole 204 in a penetrating manner. A first end 205 of the first clamping member 110 and a first end 205 of the second clamping member 120 are connected to each other, and the first clamping member 110 and/or the second clamping member 120 are/is configured to be capable of elastically deflecting about a joint therebetween, so that the first clamping member 110 and the second clamping member 120 are rotatably connected. The clamping mechanism 100 further includes a pressing slider 140. The pressing slider 140 is slidably sleeved onto the first clamping member 110 and the second clamping member 120. When the pressing slider 140 is in a releasing position, the first clamping member 110 and the second clamping member 120, in a direction from the first end 205 to a second end 206, are arranged at an included angle in an open manner, so as to form the clamping space 201. The driving mechanism 200 is in transmission connection with the pressing slider 140, and is configured to drive the pressing slider 140 to slide along the first clamping member 110 and the second clamping member 120, so that the opening and closing angle A can be changed through the pressing slider 140. The first clamping member 110 and the second clamping member 120 are arranged in a sheet shape, and the first clamping member 110 and the second clamping member 120 are arranged opposite to each other. The process of sleeving the housing 10 onto the electrode assembly 20 includes a first stage. In the first stage, the first clamping member 110 and the second clamping member 120 are configured to be capable of moving together with the housing 10 relative to the electrode assembly 20, so that the tab part 21 enters the clamping space 201, and the driving mechanism 200 drives the first clamping member 110 and the second clamping member 120 to reduce the opening and closing angle A to clamp the tab part 21. The process of sleeving the housing 10 onto the electrode assembly 20 includes a second stage following the first stage. In the second stage, the first clamping member 110 and the second clamping member 120 are configured to be capable of moving relative to the housing 10 in directions away from each other while keeping clamping the tab part 21, so that the tab part 21 passes through the through hole 14 and extends out of the accommodation chamber 11. The driving mechanism 200 is configured to drive the first clamping member 110 and/or the second clamping member 120 to rotate, so that the relative position between the first clamping member 110 and the second clamping member 120 can be switched between the clamping position and the releasing position. The opening and closing angle A in the clamping position is less than the opening and closing angle A in the releasing position. Prior to the first stage, the first clamping member 110 and the second clamping member 120 are configured to be capable of moving relative to the housing 10 to move toward the housing 10, and the driving mechanism 200 is configured to drive the first clamping member 110 and/or the second clamping member 120 to rotate to switch to the clamping position, so that the first clamping member 110 and the second clamping member 120 can pass through the through hole 14 and extend into the accommodation chamber 11. The driving mechanism 200 is configured to drive the first clamping member 110 and/or the second clamping member 120 to rotate after the first clamping member 110 and the second clamping member 120 extend into the space of the accommodation chamber 11, so as to switch the relative position from the clamping position to the releasing position.

According to some embodiments of the present application, as shown in FIG. 4, the assembly apparatus 3 includes the tab-through device 2 described above. Such an arrangement allows the tab part 21 to smoothly extend out of the housing 10, thereby effectively reducing the assembly difficulty of the battery 1 and effectively improving the assembly efficiency of the battery 1.

In summary, the embodiments of the present application can enable the tab part 21 to smoothly extend out of the housing 10, thereby effectively reducing the assembly difficulty of the battery 1 and effectively improving the assembly efficiency of the battery 1.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A tab-through device for a battery, wherein the battery comprises a housing and an electrode assembly, wherein an accommodation chamber is formed in the housing, a through hole that communicates the accommodation chamber with an outside is formed in the housing, the electrode assembly is arranged in the accommodation chamber, and the tab-through device is configured to guide a tab part of the electrode assembly to extend out of the through hole; and the tab-through device comprises:
a clamping mechanism, comprising a first clamping member and a second clamping member that are movably connected, wherein a clamping space with an adjustable opening and closing angle is capable of being formed between the first clamping member and the second clamping member; and
a driving mechanism, in transmission connection with the first clamping member and/or the second clamping member, so as to drive the first clamping member and/or the second clamping member to move to adjust the opening and closing angle;
wherein the driving mechanism is configured to drive the first clamping member and/or the second clamping member to move, so that the first clamping member and the second clamping member are capable of clamping the tab part to pass through the through hole and extend out of the accommodation chamber.

2. The tab-through device according to claim 1, wherein
the first clamping member and/or the second clamping member are configured to be rotatable about a preset rotation axis.

3. The tab-through device according to claim 2, wherein
the preset rotation axis is arranged to be perpendicular to an axis of the through hole.

4. The tab-through device according to claim 1, wherein
the first clamping member comprises a first clamping plate body and a first connecting part, the first clamping plate body being connected to the first connecting part, and the second clamping member comprises a second clamping plate body and a second connecting part, the second clamping plate body being connected to the second connecting part, wherein the first clamping plate body is connected to the first connecting part in a bending manner, a bending joint between the first clamping plate body and the first connecting part is rotatably connected to the second connecting part and/or the second clamping plate body, the clamping space is formed between the first clamping plate body and the second clamping plate body, and an included angle between the first clamping plate body and the second clamping plate body is formed as the opening and closing angle; the driving mechanism is in transmission connection with the first connecting part and/or the second connecting part, so as to drive the first clamping plate body and/or the second clamping plate body to rotate to adjust the opening and closing angle.

5. The tab-through device according to claim 4, wherein
the first clamping member is provided with an avoidance hole penetrating through two side surfaces thereof, wherein the avoidance hole spans the first connecting part and the first clamping plate body via the bending joint; during a rotation process of the first clamping plate body and/or the second clamping plate body, the avoidance hole is configured to avoid the second connecting part.

6. The tab-through device according to claim 5, wherein
a first rotating shaft accommodation hole is formed in the bending joint on both sides of the avoidance hole, a second rotating shaft accommodation hole is formed in the second connecting part, the clamping mechanism comprises a rotating shaft, and the rotating shaft is provided in the first rotating shaft accommodation hole and the second rotating shaft accommodation hole in a penetrating manner.

7. The tab-through device according to claim 1, wherein
a first end of the first clamping member and a first end of the second clamping member are connected to each other, and the first clamping member and/or the second clamping member are/is configured to be capable of elastically deflecting about a joint therebetween, so that the first clamping member and the second clamping member are rotatably connected; and
the clamping mechanism further comprises a pressing slider, wherein the pressing slider is slidably sleeved onto the first clamping member and the second clamping member; when the pressing slider is in a releasing position, the first clamping member and the second clamping member, in a direction from the first end to a second end, are arranged at an included angle in an open manner, so as to form the clamping space; the driving mechanism is in transmission connection with the pressing slider, and is configured to drive the pressing slider to slide along the first clamping member and the second clamping member, so that the opening and closing angle is capable of being changed through the pressing slider.

8. The tab-through device according to claim 7, wherein
the first clamping member and the second clamping member are arranged in a sheet shape, and the first clamping member and the second clamping member are arranged opposite to each other.

9. The tab-through device according to claim 1, wherein
a process of sleeving the housing onto the electrode assembly comprises a first stage, wherein in the first stage, the first clamping member and the second clamping member are configured to be capable of moving together with the housing relative to the electrode assembly, so that the tab part enters the clamping space, and the driving mechanism drives the first clamping member and the second clamping member to reduce the opening and closing angle to clamp the tab part.

10. The tab-through device according to claim 8, wherein
a process of sleeving the housing onto the electrode assembly comprises a second stage following the first stage, wherein in the second stage, the first clamping member and the second clamping member are configured to be capable of moving relative to the housing in directions away from each other while keeping clamping the tab part, so that the tab part passes through the through hole and extends out of the accommodation chamber.

11. The tab-through device according to claim 9, wherein
the driving mechanism is configured to drive the first clamping member and/or the second clamping member to rotate, so that a relative position between the first clamping member and the second clamping member is capable of being switched between a clamping position and a releasing position, wherein the opening and closing angle in the clamping position is less than the opening and closing angle in the releasing position; and
prior to the first stage, the first clamping member and the second clamping member are configured to be capable of moving relative to the housing to move toward the housing, and the driving mechanism is configured to drive the first clamping member and/or the second clamping member to rotate to switch to the clamping position, so that the first clamping member and the second clamping member are capable of passing through the through hole and extending into the accommodation chamber; the driving mechanism is configured to drive the first clamping member and/or the second clamping member to rotate after the first clamping member and the second clamping member extend into a space of the accommodation chamber, so as to switch the relative position from the clamping position to the releasing position.

12. An assembly apparatus for a battery, comprising:
a housing-insertion device and the tab-through device according to any one of claims 1 to 11, wherein the housing-insertion device is configured to assemble the electrode assembly into the housing from an open end of the housing; the housing-insertion device comprises a housing fixing mechanism and a carrying assembly, the housing fixing mechanism is configured to fix the housing, and the carrying assembly is configured to carry the electrode assembly;
wherein the housing fixing mechanism and the tab-through device are capable of moving relative to the carrying assembly, so as to correspond to moving away from or toward the carrying assembly; the housing fixing mechanism is configured to sleeve the housing onto the electrode assembly; the driving mechanism is configured to drive the first clamping member and the second clamping member to clamp the tab part in the accommodation chamber, so that the tab part passes through the through hole and extends out of the accommodation chamber.

13. The assembly apparatus according to claim 12, wherein
the assembly apparatus comprises a tab welding device, a post terminal welding device, and a bottom cover welding device, wherein the tab welding device is configured to weld a plurality of tab plates of the electrode assembly to form the tab part; the post terminal welding device is configured to weld the tab part, which passes through the through hole, to one side of a post terminal of the housing that faces away from the accommodation chamber; the bottom cover welding device is configured to weld a bottom cover to the open end of the housing.
